# EUROPÄISCHE PATENTSCHRIFT

(11) **EP 1 957 199 B1**
(45) Veröffentlichungstag und Bekanntmachung des Hinweises auf die Patenterteilung: **21.06.2017**
(21) Anmeldenummer: 06776865.5
(22) Anmeldetag: 16.08.2006
(51) Int. Cl.: B02C 13/20

(54) **ZWEIROTORIGER SCHLAGLEISTENBRECHER**
TWIN-ROTOR IMPACT BAR CRUSHER
CONCASSEUR A PLAQUES DE PERCUSSION ET A DEUX ROTORS

(30) Priorität: 01.12.2005 DE 102005057345
(43) Veröffentlichungstag der Anmeldung: 20.08.2008
(73) Patentinhaber: ThyssenKrupp Industrial Solutions AG, 45143 Essen (DE)
(72) Erfinder: GASSMANN, Franz-Josef, 59320 Ennigerloh (DE); MUCKERMANN, Jürgen, 59320 Ennigerloh (DE)
(74) Vertreter: thyssenkrupp Intellectual Property GmbH
(86) Internationale Anmeldenummer: PCT/EP2006/008058
(87) Internationale Veröffentlichungsnummer: WO 2007/062700

(56) Entgegenhaltungen:
- DE-C- 254 953
- DE-C- 469 757
- DE-U1- 20 108 463
- GB-A- 2 189 406
- US-A- 2 705 596
- US-A1- 2005 263 632

## Beschreibung

Die Erfindung bezieht sich auf einen zweirotorigen Schlagleistenbrecher zur Zerkleinerung von vorzugsweise Kalkstein, Mergel, Ton, Bauschutt oder ähnlichen mineralischen Materialien gemäß Oberbegriff des Anspruches 1. Ein derartiges Stand der Technik ist aus der US-A-2 705 596 bekannt. Schlagleistenbrecher, die auch als Prallbrecher bezeichnet werden, unterscheiden sich von Hammerbrechern dadurch, dass auf den Rotoren, die sich um eine waagerechte Achse drehen, über den Umfang verteilt starr mit dem jeweiligen Rotor verbunden, Schlagleisten angeordnet sind, während bei Hammerbrechern am Umfang einzelne Hämmer drehbeweglich angeordnet sind. Die Schlagleisten erstrecken sich üblicherweise - ungeteilt oder geteilt - über die gesamte Länge des Brechraumes und weisen in Rotorlängsrichtung keine Lücken auf, welche größer sind als Toleranz- oder Dehnungsfugen. Bei Schlagleistenbrechern trifft das aufgegebene Material zunächst auf die sich mit Umfangsgeschwindigkeiten von vorzugsweise 20 - 50 m/s bewegenden Schlagleisten und wird von diesen auf gegenüberliegende Prallwerke und eventuell zurück geschleudert und dabei zerkleinert. Bei Hammerbrechern wird das Material im Wesentlichen von den beweglichen Hämmern zerkleinert.

Bei den Prallbrechern gibt es Ausführungen mit einem oder zwei Rotoren.

Aus der DE 197 03 583 A1 ist ein Prallbrecher mit einem Rotor und zwei oder mehreren Prallwerken bekannt, die im Wesentlichen das Gehäuse des Prallbrechers bilden und um Horizontalachsen schwenkbar sind. Ein ähnlicher Prallbrecher ist aus der DE 42 10 809 C2 bekannt, wobei auch ein Verfahren zum Wechseln der Prallelemente und/oder Prallkörper an Prallwerken vorgeschlagen ist.

In der DE 21 07 919 C2 ist ein zweirotoriger Prallbrecher mit gleichsinnig in Materialförderrichtung umlaufenden, ebenfalls gegen Prallwände arbeitenden Rotoren bekannt, deren waagerechte Achsen in einer zur Waagerechten um 30° bis 45° geneigten Ebene liegen und von denen der zweite Rotor tiefer als der erste angeordnet ist, und bei dem die letzte der dem ersten Rotor zugeordneten Prallwände so angeordnet ist, dass die hiervon abgeprallten Materialien auf den zweiten Rotor auftreffen. Durch die gleichsinnige Drehung der Rotoren gleitet das Material jeweils zwischen den Rotoren und den Prallwänden schräg nach unten und nur wenig Material gelangt zwischen den beiden Rotoren hindurch und trifft auf den dort angeordneten keilförmigen Amboss. Dieser zum Stand der Technik gehörige zweirotorige Prallbrecher ist durch die Vielzahl der benötigten beweglichen Prallwände relativ aufwendig.

Die DE-OS 20 53 693 zeigt schließlich eine Rotor-Drehvorrichtung für eine Prallmühle mit 2 auf gleicher Höhe nebeneinander angeordneten, sich jeweils von oben gesehen nach außen drehenden Rotoren, wobei ebenfalls oberhalb der Rotoren angeordnete Prallbleche erforderlich sind.

Der Erfindung liegt die Aufgabe zu Grunde, einen zweirotorigen Schlagleistenbrecher vorzuschlagen, bei dem auf die aufwendigen Prallwände verzichtet und durch Ausnutzung erhöhter Prallenergie die Zerkleinerungsleistung gesteigert werden kann.

Die Lösung der Aufgabe ist im Patentanspruch 1 angegeben. Die Unteransprüche 2 - 11 enthalten sinnvolle Ausführungsformen dazu.

Erfindungsgemäß wird vorgeschlagen, dass die beiden Rotoren nebeneinander auf gleicher oder nahezu gleicher Höhe angeordnet sind und eine von oben betrachtet gegenläufig nach innen gerichtete Drehrichtung haben. Bei Verwendung einer Ambossleiste unterhalb des Spaltes zwischen den beiden Rotoren hat es sich als günstig erwiesen, dass sich an die Ambossleiste beidseitig in Bewegungsrichtung des Materials eine ein- oder mehrstufig mit Mahlleisten versehene Mahlbahn anschließt.

Erfindungsgemäß findet also eine Zerkleinerung zunächst ausschließlich zwischen den zwei gegeneinander arbeitenden Schlagleistenbrecherrotoren statt, wobei das Material zusätzlich auf die unter dem Spalt zwischen den beiden Rotoren angeordnete Ambossleiste und anschließend zur zusätzlichen Zerkleinerung auf die Mahlbahn mit den ein oder mehreren Mahlleisten trifft. Zur Kalibrierung und Einstellung der Korngröße des Materials können die Ambossleiste und/oder die Mahlleiste vertikal verstellt werden. Insbesondere kann durch eine hydraulische Abstützung der Spalt zwischen den Schlagleisten und der Ambossleiste bzw. den Mahlleisten definiert eingestellt und auch ein Überlastschutz erreicht werden. Es hat sich gezeigt, dass der neue Doppelwellenschlagleistenbrecher im Vergleich zu einem Hammerbrecher einem geringeren Verschleiß ausgesetzt ist, weil die Brecherwerkzeuge, d. h. die Schlagleisten besser ausgenutzt werden. Das gilt insbesondere dann, wenn die Schlagleisten wendbar an den Rotoren befestigt sind.

Durch die Verwendung von der Ambossleiste nachgeschalteten mehrstufigen Mahlbahnen kann eine weitere Zerkleinerung gewährleistet werden. Auf den Einsatz von bei Hammerbrechern üblichen Rostkörben (vgl. DE 197 132 64 C1) kann dadurch verzichtet werden.

Der erfindungsgemäße zweirotorige Prallbrecher hat außerdem folgende Vorteile:
- Größere Durchsatzleistung als Hammerbrecher gleicher Baugröße;
- Unempfindlich bei Materialfeuchten bis zu 20 % (abhängig von Produktgröße);
- Unempfindlich bei nicht brechbarem Material durch die hydraulische Absenkbarkeit der Ambossleiste und der Mahlbahn;
- Einfluß auf die Endkorngröße durch die hydraulische Verstellung der Mahlbahnen jeder Zeit möglich;
- Größere Einwurföffnung ermöglicht die Aufgabe größerer Materialstücke im Vergleich zu leistungsgleichen zum Stand der Technik gehörigen Prallbrechern;
- Geringerer Energiebedarf im Vergleich zum Hammerbrecher, da die Mahlarbeit auf den Rostkörben entfällt.

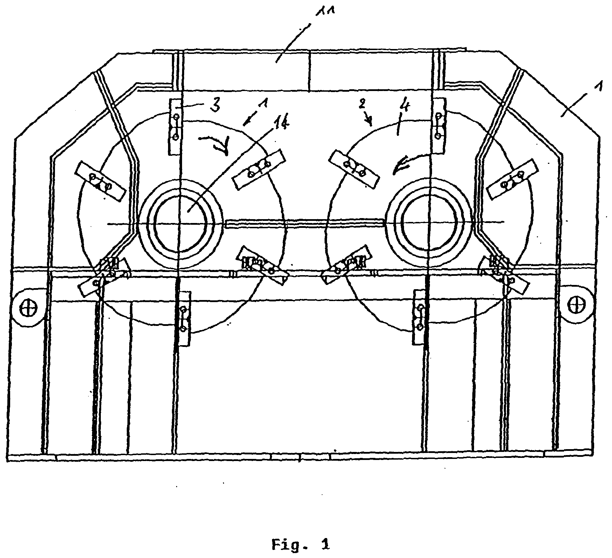

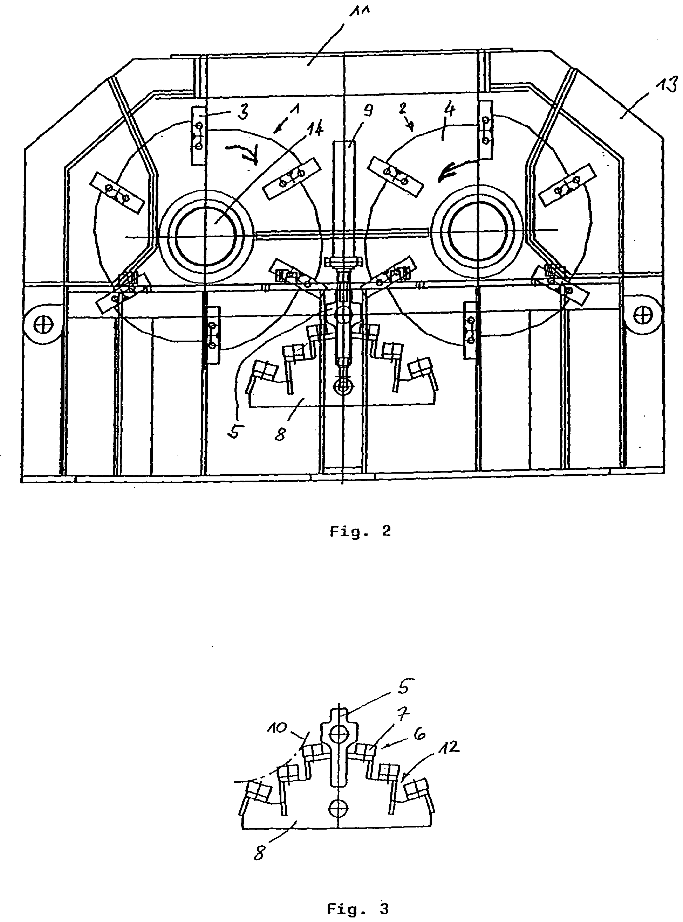

Die Erfindung wird anhand der beigefügten Figuren 1 und 2 beispielsweise näher erläutert.
- Fig. 1: zeigt einen Querschnitt durch den erfindungsgemäßen Prallbrecher ohne Ambossleiste (5).
- Fig. 2: zeigt einen Querschnitt durch den erfindungsgemäßen Prallbrecher mit Ambossleiste (5).
- Fig. 3: zeigt den aus dem Gehäuse 11 entfernbaren Ständer 8, mit Ambossleiste (5) und Mahlleisten (6) in separater Darstellung.

Die Figur 1 zeigt einen Senkrechtquerschnitt durch einen Prallbrecher mit den beiden gegenläufig rotierenden Rotoren 1 und 2, an denen am Umfang gleichmäßig verteilte Schlagleisten 3 angeordnet sind. Diese Schlagleisten 3 sind wendbar und werden von einer Vielzahl in Achsrichtung nebeneinander angeordneten Rotorscheiben 4 gehalten. Die Rotorscheiben 4 sind in an sich bekannter Weise jeweils auf einer zentralen Welle 14 fixiert.

Nach Figur 2 befindet sich unter dem Spalt zwischen den beiden Rotoren 1, 2 sich eine über die gesamte Länge der Rotoren 1, 2 erstreckende Ambossleiste 5, die auf einem Ständer 8 befestigt ist. Auf diesem Ständer 8 sind zusätzlich parallel zur Ambossleiste 5 verlaufende Mahlleisten 6 mit auswechselbaren Verschleißplatten 7 angeordnet. Auf jeder Seite der Ambossleiste 5 befinden sich im dargestellten Fall jeweils drei Mahlleisten 6, die mit ihren oberen Verschleißplatten 7 eine bogenförmige Mahlbahn 10 bilden. Der Ständer 8 mit der darauf befestigten Ambossleiste 5 und den Mahlleisten 6 ist über einen außerhalb des Gehäuses 11 angeordneten Hydraulikzylinder 9 in vertikaler Richtung verstellbar und insbesondere als Überlastschutz absenkbar. Zwischen den einzelnen Verschleißplatten 7 bzw. Mahlleisten 6 befinden sich Freiräume 12, durch die zerkleinertes Material hindurchfallen kann. Der gesamte Prallbrecher befindet sich in einem geschlossenen Gehäuse 11 mit verschiedenen Öffnungsklappen 13 für Wartungs- und Reparaturzwecke.

### Bezugszeichenliste:

- 1: Rotor
- 2: Rotor
- 3: Schlagleiste
- 4: Rotorscheibe
- 5: Ambossleiste
- 6: Mahlleiste
- 7: Verschleißplatte
- 8: Ständer für 5, 6
- 9: Hydraulikzylinder
- 10: Mahlbahn
- 11: Gehäuse
- 12: Freiräume
- 13: Öffnungsklappe
- 14: Welle

## Patentansprüche

1. Zweirotoriger Schlagleistenbrecher zur Zerkleinerung von vorzugsweise Kalkstein, Mergel, Ton, Bauschutt oder ähnlichen mineralischen Materialien mit zwei parallel zueinander waagerecht angeordneten Rotoren (1, 2), am Umfang der Rotoren (1, 2) gleichmäßig verteilt, starr befestigten, sich vorzugsweise über die gesamte Brechraum-Länge der Rotoren (1, 2) erstreckenden Schlagleisten (3), wobei die beiden Rotoren (1, 2) nebeneinander auf gleicher oder nahezu gleicher Höhe angeordnet sind, und eine von oben betrachtet gegenläufig nach innen gerichtete Drehrichtung haben, zwischen den Rotoren (1, 2) unterhalb des von ihnen gebildeten Spaltes sich parallel zu den Rotorachsen eine Ambossleiste (5) erstreckt und **dadurch gekennzeichnet, dass** die Ambossleiste (5) in vertikaler Richtung hydraulisch verstellbar und/oder nachgiebig gelagert ist.

2. Zweirotoriger Schlagleistenbrecher nach Anspruch 1, **dadurch gekennzeichnet, dass** sich an die Ambossleiste (5) beidseitig in Bewegungsrichtung des Materials eine ein- oder mehrstufige mit Mahlleisten (6) versehene, Mahlbahn (10) anschließt.

3. Zweirotoriger Schlagleistenbrecher nach Anspruch 2, **dadurch gekennzeichnet, dass** jede Stufe der Mahlbahn (10) aus parallel zur Ambossleiste (5) verlaufenden Mahlleisten (6) besteht.

4. Zweirotoriger Schlagleistenbrecher nach Anspruch 2, **dadurch gekennzeichnet, dass** die Mahlleisten (6) an ihrer Oberfläche auswechselbare Verschleißplatten (7) besitzen.

5. Zweirotoriger Schlagleistenbrecher nach Anspruch 2, **dadurch gekennzeichnet, dass** Ambossleiste (5) und Mahlleisten (6) linear- oder bogenförmig relativ zueinander verstellbar sind.

6. Zweirotoriger Schlagleistenbrecher nach Anspruch 2, **dadurch gekennzeichnet, dass** die Mahlleisten (6) in vertikaler Richtung hydraulisch verstellbar und/oder nachgiebig gelagert sind.

7. Zweirotoriger Schlagleistenbrecher nach Anspruch 2, **dadurch gekennzeichnet, dass** die Mahlleisten (6) und die Ambossleiste (5) auf einem gemeinsamen Ständer (8) angeordnet sind.

8. Zweirotoriger Schlagleistenbrecher nach Anspruch 7, **dadurch gekennzeichnet, dass** die Ambossleiste (5) und die Mahlleisten (6) auf dem gemeinsamen Ständer (8) aus dem Gehäuse (11) des Prallbrechers entfernbar sind.

9. Zweirotoriger Schlagleistenbrecher nach Anspruch 7, **dadurch gekennzeichnet, dass** Ambossleiste (5) und/oder Mahlleisten (6) auswechselbar am Ständer (8) befestigt sind und der Ständer (8) hydraulisch verstellbar und/oder nachgiebig gelagert ist.

10. Zweirotoriger Schlagleistenbrecher nach Anspruch 2, **dadurch gekennzeichnet, dass** zwischen den Mahlleisten (6) Freiräume (12) zum Ableiten von Feinmaterial vorhanden sind.

11. Zweirotoriger Schlagleistenbrecher nach Anspruch 2, **dadurch gekennzeichnet, dass** die Schlagleisten (3) wendbar an den Rotoren (1, 2) befestigt sind.

## Claims

1. Twin-rotor impact bar crusher for comminuting preferably limestone, marl, clay, building rubble or similar mineral materials, comprising two rotors (1, 2) arranged horizontally parallel to one another and impact bars (3) rigidly fastened to the circumference of the rotors (1, 2) in a uniformly distributed manner and preferably extending over the entire length of the crushing space of the rotors (1, 2), wherein the two rotors (1, 2) are arranged next to one another at the same height, or virtually the same height, and have, when viewed from above, opposed inwardly directed directions of rotation, and an anvil strip (5) extends between the rotors (1, 2), underneath the gap formed by them, and parallel to the rotor axes, **characterized in that** the anvil strip (5) is mounted as hydraulically adjustable and/or compliant in the vertical direction.

2. Twin-rotor impact bar crusher according to Claim 1, **characterized in that** the anvil strip (5) is adjoined on both sides in the direction of movement of the material by a single-stage or multi-stage milling path (10) provided with milling strips (6).

3. Twin-rotor impact bar crusher according to Claim 2, **characterized in that** each stage of the milling path (10) consists of milling strips (6) running parallel to the anvil strip (5).

4. Twin-rotor impact bar crusher according to Claim 2, **characterized in that** the milling strips (6) have exchangeable wearing plates (7) on their surface.

5. Twin-rotor impact bar crusher according to Claim 2, **characterized in that** the anvil strip (5) and the milling strips (6) are adjustable in relation to one another in a linear or arcuate manner.

6. Twin-rotor impact bar crusher according to Claim 2, **characterized in that** the milling strips (6) are mounted as hydraulically adjustable and/or compliant in the vertical direction.

7. Twin-rotor impact bar crusher according to Claim 2, **characterized in that** the milling strips (6) and the anvil strip (5) are arranged on a common stand (8).

8. Twin-rotor impact bar crusher according to Claim 7, **characterized in that** the anvil strip (5) and the milling strips (6) on the common stand (8) can be removed from the housing (11) of the impact crusher.

9. Twin-rotor impact bar crusher according to Claim 7, **characterized in that** the anvil strip (5) and/or the milling strips (6) are exchangeably fastened to the stand (8) and the stand (8) is mounted as hydraulically adjustable and/or compliant.

10. Twin-rotor impact bar crusher according to Claim 2, **characterized in that** clearances (12) for discharging fine material are present between the milling strips (6).

11. Twin-rotor impact bar crusher according to Claim 2, **characterized in that** the impact bars (3) are reversibly fastened to the rotors (1, 2).

## Revendications

1. Concasseur à barres de percussion et à deux rotors pour broyer de préférence du calcaire, de la marne, de l'argile, des gravats ou des matières minérales similaires, comprenant deux rotors (1, 2) disposés horizontalement parallèlement l'un à l'autre, des barres de percussion (3) réparties uniformément sur la périphérie des rotors (1, 2) et fixées rigidement, s'étendant de préférence sur toute la longueur de la chambre de broyage des rotors (1, 2), les deux rotors (1, 2) étant disposés l'un à côté de l'autre à la même hauteur ou approximativement la même hauteur et ayant des sens de rotation orientés vers l'intérieur et en sens inverse, vu de dessus, une barre d'enclume (5) s'étendant entre les rotors (1, 2) en dessous de l'interstice formé par ceux-ci, parallèlement aux axes des rotors, et **caractérisé en ce que** la barre d'enclume (5) est supportée de manière flexible et/ou de manière réglable hydrauliquement dans la direction verticale.

2. Concasseur à barres de percussion et à deux rotors selon la revendication 1, **caractérisé en ce qu'**un chemin de broyage (10) à un ou plusieurs étages, pourvue de barres de broyage (6), se raccorde à la barre d'enclume (5) des deux côtés dans le sens de déplacement de la matière.

3. Concasseur à barres de percussion et à deux rotors selon la revendication 2, **caractérisé en ce que** chaque étage du chemin de broyage (10) se compose de barres de broyage (6) s'étendant parallèlement à la barre d'enclume (5).

4. Concasseur à barres de percussion et à deux rotors selon la revendication 2, **caractérisé en ce que** les barres de broyage (6) possèdent au niveau de leur surface des plaques d'usure remplaçables (7).

5. Concasseur à barres de percussion et à deux rotors selon la revendication 2, **caractérisé en ce que** la barre d'enclume (5) et les barres de broyage (6) peuvent être déplacées les unes par rapport aux autres sous forme linéaire ou en courbe.

6. Concasseur à barres de percussion et à deux rotors selon la revendication 2, **caractérisé en ce que** les barres de broyage (6) sont supportées de manière flexible et/ou réglable hydrauliquement dans la direction verticale.

7. Concasseur à barres de percussion et à deux rotors selon la revendication 2, **caractérisé en ce que** les barres de broyage (6) et la barre d'enclume (5) sont disposées sur un support commun (8).

8. Concasseur à barres de percussion et à deux rotors selon la revendication 7, **caractérisé en ce que** la barre d'enclume (5) et les barres de broyage (6) sur le support commun (8) peuvent être enlevées du boîtier (11) du concasseur à percussion.

9. Concasseur à barres de percussion et à deux rotors selon la revendication 7, **caractérisé en ce que** la barre d'enclume (5) et/ou les barres de broyage (6) sont fixées de manière remplaçable sur le support (8), et le support (8) est supporté de manière flexible et/ou de manière déplaçable hydrauliquement.

10. Concasseur à barres de percussion et à deux rotors selon la revendication 2, **caractérisé en ce qu'**entre les barres de broyage (6) sont prévus des espaces libres (12) pour évacuer la matière fine.

11. Concasseur à barres de percussion et à deux rotors selon la revendication 2, **caractérisé en ce que** les barres de percussion (3) sont fixées de manière réversible sur les rotors (1, 2).
